# EUROPEAN PATENT APPLICATION

(11) **EP 1 860 751 A1**
(43) Date of publication of application: **28.11.2007**
(21) Application number: 06010931.1
(22) Date of filing: 26.05.2006
(51) Int. Cl.: H02J 7/00, G06F 1/26

(54) **Computer controlled method and charging apparatus for converting input power into required charging voltage and charging current**

(71) Applicant: ASUSTeK Computer Inc., Peitou, Taipei City (TW)
(72) Inventor: Huang, Jen-Yuan ASUSTek COMPUTER INC., Taipei City Taiwan R.O.C. (TW)
(74) Representative: Schmitz, Hans-Werner

(57) **Abstract**

A charging apparatus (10) includes a control unit (60) and a power converter (90). The control unit (60) is used for generating a power control signal according to an input signal to adjust charging power. The power converter (90) is electrically connected to the control unit (60), for converting input power into charging power, wherein the input signal is determined in accordance with a computer (20).

## Description

The present invention relates to a charging apparatus and a charging method according to the pre-characterizing clauses of claims 1 and 8.

Electric specifications of portable electronic devices vary from device to device; therefore, the requirements of the charging power are also different when the battery is under a condition of being charged.

In general, many portable electronic devices attach to an exclusive charging device (i.e., the charging device being designed exclusively and specifically for the specific portable electronic device). Therefore, users can utilize the exclusive charging device for recharging of the spent (i.e., depleted or used) battery. However, this procedure is very inconvenient for the users as they will need to carry, own, and transport many exclusive charging devices (e.g., one per owned portable electronic device).

This in mind, the present invention aims at providing a charging apparatus and a charging method that can operate with any portable electronic device.

This is achieved by a charging apparatus and a charging method according to claims 1 and 8. The dependent claims pertain to corresponding further developments and improvements.

As will be seen more clearly from the detailed description following below, the claimed charging apparatus and a charging method includes a power converter that is electrically connected to a control unit.

For completeness, various aspects of the invention are described in the following numbered clauses:
1. A charging apparatus comprises:
   a control unit for generating a power control signal according to an input signal; and
   a power converter electrically connected to the control unit for converting an input power into a charging power, wherein voltage values and current values of the charging power are set by the power control signal.
2. The apparatus of clause 1, wherein the control unit is a micro controller, for processing a predetermined calculation in accordance with the input signal to generate the power control signal.
3. The apparatus of clause 2, further comprising:
   a memory unit, electrically connected to the control unit, for storing a comparison table, wherein the predetermined calculation is referring to the comparison table in accordance with the input signal.
4. The apparatus of clause 2, further comprising:
   a bridge interface, electrically connected to the micro controller, for receiving a control signal and transferring the control signal into the input signal.
5. The apparatus of clause 4, wherein the computer comprises software to be an input interface for receiving a data, and the computer generates the control signal according to the data.
6. The apparatus of clause 4, wherein the bridge interface further receives the input power from the computer.
7. The apparatus of clause 4, further comprising:
   a power input connector, electrically connected to the power converter, for receiving the input power providing outside the computer.
8. A method for controlling a charging status, the method comprises:
   generating a power control signal according to an input signal; and
   converting an input power into a charging power, wherein voltage values and current values of the charging power are set by the power control signal.
9. The method of clause 8, further comprising:
   storing a comparison table;
   wherein the step for generating the power control signal further comprising:
   generating the power control signal through referring to the comparison table in accordance with the input signal.
10. The method of clause 8, further comprising:
   receiving a control signal from a computer and transferring the control signal into the input signal.
11. The method of clause 10, further comprising:
   installing a software in the computer to be an input interface for receiving a data, and generating the control signal according to the data.

In the following, the invention is further illustrated by way of example, taking reference to the accompanying drawings. Thereof
Fig. 1 is a block diagram of a charging apparatus according to a first embodiment of the present invention,
Fig. 2 is a block diagram of a charging apparatus according to a second embodiment of the present invention, and
Fig. 3 is a flowchart of the method for controlling a charging status according to an embodiment of the present invention.

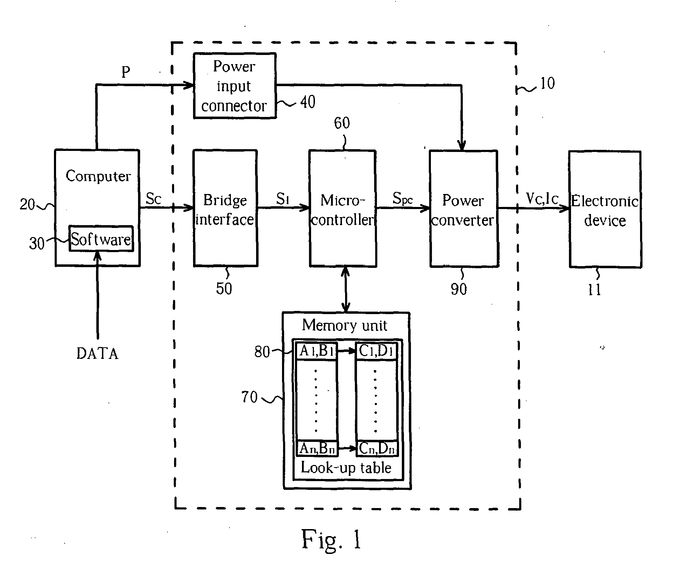

Please refer to Fig. 1. Fig. 1 is a block diagram of a charging apparatus 10 according to a first embodiment of the present invention. In this embodiment, the charging apparatus 10 includes a bridge interface 50, a power input connector 40, a micro-controller 60, a memory unit 70, and a power converter 90. Additionally, the charging apparatus 10 is electrically connected to a computer 20 via the power input connector 40 and the bridge interface 50. There is software 30 installed in the computer 20 to provide a human-machine interface such that the users can input data related to the charging status. For example, this facilitates the users being able to provide information about the brand or the type of the electronic device 11 to the charging apparatus 10. Please note, in this example is it assumed that the electronic device 11 does indeed include rechargeable batteries. A look-up table 80 is established in the memory unit 70 for recording a corresponding relationship between hardware information and the charging specifications of the electronic devices according to different brands and types of electronic devices 11. Alternatively, the corresponding relationships are just as easily stored in the software installed in the computer and this storage option is within the scope of the present invention. Please note that, in this embodiment, the charging specifications stored in the look-up table 80 include two pieces of information: First, the charging voltage and, second, the charging current. As shown in Fig. 1, the look-up table 80 includes two storage sections. One storage section is applied for recording the hardware information of the portable electronic devices. In other words, brands A₁ - Aₙ and types B₁ - Bₙ. The other storage section is applied for recording the charging specifications of the portable electronic devices. In other words, the values of the charging voltage C₁ - Cₙ and the values of the charging current D₁ - Dₙ. The detailed operations and procedures are further discussed in the following paragraphs.

Initially, the users are able to input data DATA (for example, the hardware information about the brand and the type of the electronic device 11) through the utilization of the software 30 installed in the computer 20 (i.e., said human-machine interface). Next, the software 30 transfers the data DATA into a control signal S_{C}, and then further transfers the control signal S_{C} into an input signal S_{I}, which is acceptable by the micro-controller 60 via the bridge interface 50. Finally, the micro-controller 60 processes a predetermined calculation according to and complying with the input signal S_{I} for determining the charging voltage and the charging current required by the specific charging procedures of the electronic device. Additionally, a desired power control signal S_{PC} is generated to control the power converter 90. As Fig. 1 shows, the charging apparatus 10 derives input power P from the computer 20 through the power input connector 40 and inputs the input power P into the power converter 90. Furthermore, the power input connector 40 is also capable of deriving input power P from an outside power source (for example, an external power supply) and inputs the input power P into the power converter 90. The power converter 90 converts the input power P into a suitable charging voltage V_{C} and a suitable charging current I_{C} according to and complying with the power control signal S_{PC} to charge the batteries in the electronic device 11.

Please note that, the acceptable data DATA inputted by the users can be any information about the charging status. For example, the data DATA indicates the brand A₁ and the type B₁ of the electronic device 11, therefore, the data DATA inputted by the users is transferred into the control signal S_{C} by the computer 20 and then being transferred into the input signal S₁ again by the bridge interface 50. In other words, the input signal S₁ transmits the information about the brand A₁ and the type B₁ into the micro-controller 60, then the micro-controller 60 refers to the look-up table 80 stored in the memory unit 70 according to the information provided by the input signal S_{I}. Therefore, the micro-controller 60 knows that the required values of the charging voltage and the charging current are C₁ and D₁ respectively according to the look-up table 80. Next, the micro-controller 60 refers to the information about the charging status to generate the power control signal S_{PC} and then inputs the power control signal S_{PC} into the power converter 90 to drive the power converter 90 converting the input power P into a suitable charging voltage V_{C} and a suitable charging current I_{C}. Additionally, the users can directly set the charging voltage V_{C} and the charging current I_{C} through utilization of an input interface, such as the said human-machine interface, provided by the software 30. Given the condition that the user directly sets Vc and Ic, the predetermined calculation processed by the micro-controller 60 is just transferring the input signal S_{I} into the power control signal S_{PC}, which is acceptable by the power converter 90. That is, it is not necessary for the micro-controller 60 to access the look-up table 80 stored in the memory unit 70 to set the charging voltage V_{C} and the charging current I_{C}.

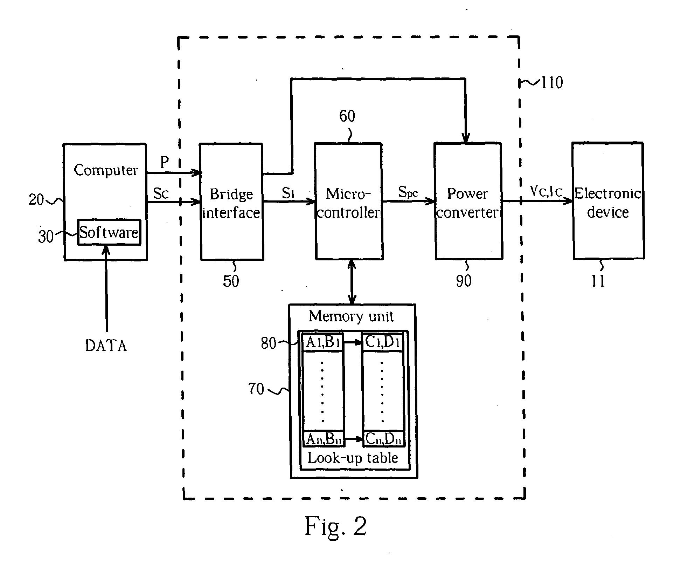

In this embodiment, re-writable memory cells, well known to those of average skill in this art, construct the memory unit 70; therefore, the users are able to change the relationships of the look-up table 80 stored in the memory unit 70. For example, the users can input a set of new relationships corresponding to various brands and the various brands corresponding charging specifications through utilization of the human-machine interface provided by the software 30. The corresponding relationships are transmitted from the computer 20 to the micro-controller 60 via the bridge interface 50, and the micro-controller 60 saves the corresponding relationships into the look-up table 80 in the memory unit 70. Please consider an alternate, more efficient method, wherein the computer 20 links to the provider of the charging apparatus 10 (e.g., the manufacturer or distributor or reseller) through the Internet. In this case, the provider can regularly update the corresponding relationships to be stored in the look-up table 80. The users simply click various icons displayed on a computer screen of the computer 20 to download and update data DATA. Given this scenario, it is unnecessary to input data DATA by keying in a list of corresponding relationships. Additionally, it is possible to increase an adjusting switch (Please note, the adjusting switch is not illustrated in Fig. 1 or Fig. 2) on the charging apparatus 10, 110 to realize the function of fixing the charging voltage through setting the adjusting switch.

All of the above-mentioned signals are transmitted from the computer 20 into the charging apparatus 10 and carried by a general communication interface of the computer 20, such as the well-known universal serial bus (USB), IEEE 1394 interface, or RS-232 serial port, or any other similar means. It is therefore noted that the bridge interface 50 in the charging apparatus 10 must be the universal serial bus (USB), IEEE 1394 interface, or RS-232 serial port corresponding to the computer 20. These standard interfaces all support power pins for externally connected devices, such as the electronic device 11, so the power pins of the bridge interface 50 are also applied to provide the input power P for the charging apparatus 10.

Please refer to Fig. 2. Fig. 2 is a block diagram of a charging apparatus 110 according to a second embodiment of the present invention. In this embodiment, the input power P is directly transmitted from the bridge interface 50 to the power converter 90. Consequently, it is an improvement for the charging apparatus 110 in both cost and size because the power input connector 40 is eliminated.

Please note, regarding the charging apparatus 110 illustrated in the Fig. 2, although it is economized in cost and size through receiving the control signal S_{C} and the input power P from the computer 20 together (i.e., simultaneously) by the bridge interface 50, one having average skill in the related art will readily know that the power supported by the above-mentioned communication interfaces (such as USB, IEEE1394, and RS-232 serial ports) each has a maximum capability provided via the power pin. Therefore, if the batteries in the electronic device 11 require a higher charging voltage V_{C} or a higher charging current I_{C} than the maximum capability of the power pin, then the power converter 90 in the charging apparatus 110 cannot provide sufficient input power P from the computer 20 through the bridge interface 50 to generate the required charging voltage V_{C} and the required charging current I_{C}. That is, the range of charging voltage and charging current provided by the charging apparatus 110 is small. For the charging apparatus 10 illustrated in the Fig. 1, it is capable of gathering sufficient power from the computer 20 because it has an individual power input connector 40. Therefore, if the batteries in the electronic device 11 require a higher charging voltage V_{C} or a higher charging current I_{C}, the power converter 90 in the charging apparatus 110 is still able to gather and supply sufficient input power P directly from the computer 20 via the power input connector 40 to generate the required charging voltage V_{C} and the required charging current I_{C}. The cost and size of the charging apparatus 10 are increased due to the power input connector 40, however, as compared to the charging apparatus 110, the range of charging voltage and charging current provided by the charging apparatus 10 is greater than the range that is supported by the charging apparatus 110. Users can choose one of either the charging apparatuses 10, 110 according to specific requirements.

Please note that, the charging apparatuses 10, 110 can each be an independent product residing outside of the computer 20, for example, the charging apparatuses 10, 110 are portable devices outside of the computer 20 and connecting to the computer 20 via a power line or a transmission line. However, the charging apparatuses 10, 110 can also be integrated with the computer 20 (for example, a notebook computer) such that the computer 20 has the ability to charge other electronic devices. For instance, an example of this configuration is when the charging apparatus 110 is directly integrated with a motherboard on the same printed circuit board (PCB). Meanwhile, there is a charging port positioned on the housing of the computer 20, and the power converter 90 connects to the electronic device 11 that requires an electrical charge through the charging port. If the bridge interface 50 is a PCI interface, then the charging apparatus 110 receives the control signal S_{c} and the input power P through the PCI interface in the computer 20. Furthermore, the charging apparatuses 10, 110 may also come in the form of general (i.e., non-specific, generic) add-on cards. In this case, it is possible to insert the add-on cards into a slot on the motherboard, wherein the motherboard is installed in the computer 20 or the add-on cards can be connected individually with the housing of the computer 20. If the above-discussed slot is a PCI slot and the bridge interface 50 of the charging apparatus 110 is also a PCI interface, then the charging apparatus 110 receives the control signal S_{c} and the input power P through the PCI interface in the computer 20. Additionally, if the above-discussed slot is a PCI slot and the bridge interface 50 of the charging apparatus 10 is also a PCI interface, the charging apparatus 10 can further include a power input connector 40, electrically connected to the output of the power supplier in the computer 20 to gather the required input power P. At the same time, the charging apparatus 10 receives the control signal S_{c} from the computer 20 through the PCI interface.

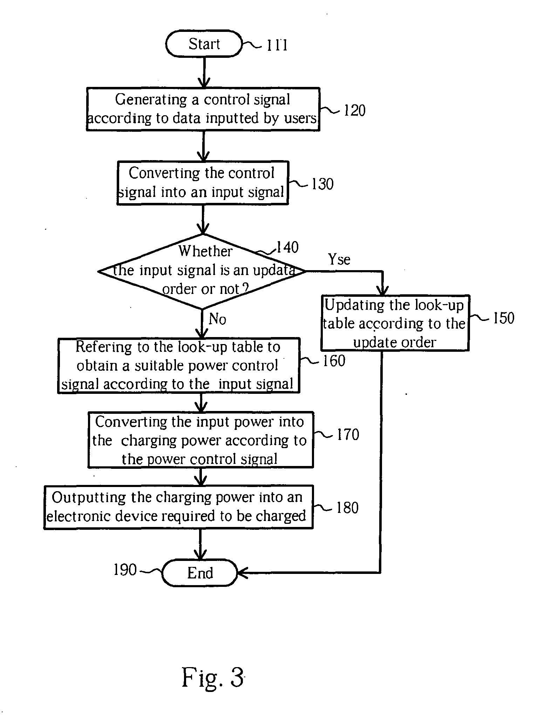

Please refer to Fig. 3. Fig. 3 is a flowchart of the method for controlling a charging status of the present invention. As shown in Fig. 3, the method for controlling the charging status of the present invention includes following steps:
- step 111:: start;
- step 120:: utilize software installed in a computer to input data, and the computer generates a control signal according to the inputted data;
- step 130:: the control signal is transferred into an input signal through a bridge interface;
- step 140:: a micro-controller determines whether the input signal is an update order or not, if the input signal is an update order, proceeding step 150; if the input signal is not an update order, proceeding step 160;
- step 150:: the micro-controller accesses a memory unit, and updates a look-up table stored in the memory unit according to the update order, wherein the look-up table records the corresponding relationships between the input data and the charging voltage and the charging current, jumping to step 190;
- step 160:: the micro-controller refers to the look-up table stored in the memory unit according to the input signal, and obtains a suitable power control signal according to the corresponding relationship between the input data and the charging voltage and the charging current recorded in the look-up table;
- step 170:: a power converter converts input power into corresponding charging voltage and charging current in accordance with the power control signal;
- step 180:: outputting the charging voltage and the charging current to the electronic device required to be charged;
- step 190:: end.

Compared with the related art, the charging apparatus and the control method of the present invention thereof apply a ready power to be the input power, and adjust the power converter through the control signal set by users to convert the input power into the required charging power. Consequently, the charging apparatus disclosed in the present invention provides suitable charging voltage and charging current according to specifications of different rechargeable batteries. In other words, for different batteries, the users just have to provide correct charging information (e.g., such as brands and types) via an input interface, then the charging apparatus disclosed in the present invention is able to process the charging procedures correctly for the rechargeable batteries in the electronic device.

## Claims

1. A charging apparatus (10) comprises:
a control unit (60) for generating a power control signal according to an input signal; and **characterised by**:
a power converter (90) electrically connected to the control unit (60) for converting an input power into a charging power, wherein voltage values and current values of the charging power are set by the power control signal.

2. The apparatus of claim 1, **characterised in that** the control unit (60) is a micro controller, for processing a predetermined calculation in accordance with the input signal to generate the power control signal.

3. The apparatus of claim 2, **characterised by**:
a memory unit (70), electrically connected to the control unit (60), for storing a comparison table (80), wherein the predetermined calculation is referring to the comparison table (80) in accordance with the input signal.

4. The apparatus of claim 2, **characterised by**:
a bridge interface (50), electrically connected to the micro controller 60), for receiving a control signal and transferring the control signal into the input signal.

5. The apparatus of claim 4, **characterised in that** the computer (20) comprises software (30) to be an input interface for receiving a data, and the computer (20) generates the control signal according to the data.

6. The apparatus of claim 4, **characterised in that** the bridge interface (50) further receives the input power from the computer (20).

7. The apparatus of claim 4, **characterised by**:
a power input connector (40), electrically connected to the power converter (90), for receiving the input power providing outside the computer (20).

8. A method for controlling a charging status, the method comprises:
generating a power control signal according to an input signal; and
**characterised by**:
converting an input power into a charging power, wherein voltage values and current values of the charging power are set by the power control signal.

9. The method of claim 8, **characterised by**:
storing a comparison table (80);
wherein the step for generating the power control signal further comprising:
generating the power control signal through referring to the comparison table (80) in accordance with the input signal.

10. The method of claim 8, **characterised by**:
receiving a control signal from a computer (20) and transferring the control signal into the input signal.

11. The method of claim 10, **characterised by**:
installing a software (30) in the computer (20) to be an input interface for receiving a data, and generating the control signal according to the data.
